# FASCICULE DE BREVET EUROPEEN

(11) **EP 2 153 629 B1**
(45) Date de publication et mention de la délivrance du brevet: **25.01.2017**
(21) Numéro de dépôt: 08805892.0
(22) Date de dépôt: 29.05.2008
(51) Int. Cl.: H04L 29/08, G07F 7/10, G06K 19/073, G06F 12/14, G06Q 20/34

(54) **PROCEDE DE SELECTION D'UNE APPLICATION INSTALLEE SUR UN MODULE SECURISE, TERMINAL ET MODULE DE SECURITE ASSOCIES**
VERFAHREN ZUR AUSWAHL EINER AUF EINEM GESICHERTEN MODUL INSTALLIERTEN ANWENDUNG SOWIE ZUGEHÖRIGES ENDGERÄT UND SICHERHEITSMODUL
METHOD FOR SELECTING AN APPLICATION INSTALLED ON A SECURED MODULE, AND ASSOCIATED TERMINAL AND SECURITY MODULE

(30) Priorité: 01.06.2007 FR 0755411
(43) Date de publication de la demande: 17.02.2010
(73) Titulaire: Orange, 75015 Paris (FR)
(72) Inventeur: PICQUENOT, David, F-14280 Saint Contest (FR); SAIF, Ahmad, F-14000 Caen (FR)
(86) Numéro de dépôt international: PCT/FR2008/050949
(87) Numéro de publication internationale: WO 2008/152313

(56) Documents cités:
- WO-A-01/18746
- FR-A- 2 878 677
- US-A1- 2004 087 273
- US-A1- 2004 232 247
- US-B1- 6 961 587

## Description

La présente invention se rapporte au domaine des télécommunications, et plus particulièrement à celui de la sélection des applications hébergées sur un élément sécurisé d'un terminal mobile.

La plupart des terminaux mobiles existants permettent, non seulement d'établir des communications téléphoniques, mais également d'exécuter un certain nombre d'applications téléchargées dans un module sécurisé lié au terminal. Ce module de sécurité peut être un module mémoire du terminal ou un support amovible (par exemple une carte à puce d'abonné) inséré dans le terminal.

De telles applications fonctionnent en mode esclave, c'est-à-dire qu'une application n'est exécutée que lorsqu'elle reçoit un ordre de sélection (ordre "select"). Cet ordre de sélection, émis par un équipement communicant, encore appelé borne, contient en paramètre un identifiant de l'application à sélectionner.

Ainsi, une borne, située à proximité du terminal mobile, souhaitant effectuer une transaction via une application installée sur le module de sécurité de ce terminal mobile, enverra un ordre de sélection contenant l'identifiant de cette application.

Actuellement, ces bornes ne connaissent en principe qu'un identifiant correspondant au service à rendre, par exemple un identifiant pour le paiement si la borne est une borne de paiement.

Avec l'accroissement des capacités des modules de sécurité, il est maintenant possible de stocker sur un même module de sécurité plusieurs applications, dont plusieurs applications de même type mais avec un identifiant différent. La borne a la possibilité d'interroger le module de sécurité par l'envoi d'une commande spécifique (commande ADPU "liste appli") et obtient en retour la liste des identifiants des applications présentes sur le module de sécurité. La borne peut ensuite sélectionner une des applications présentes. Le choix est donc effectué par la borne.

Le porteur du mobile ne peut intervenir sur ce choix. Ceci pose un problème lorsque plusieurs applications équivalentes sont installées sur le module de sécurité. Par exemple, dans le domaine du paiement, le porteur d'un terminal mobile, client de la Banque A et de la Banque B, ayant fait installer sur le module de sécurité lié à son terminal mobile, une application A pour les transactions effectuées sur son compte de la Banque A et une application B pour les transactions effectuées sur son compte de la Banque B ne peut privilégier l'utilisation de l'application A.

La présente invention permet de pallier à ce problème en proposant un procédé de sélection de l'application prenant en compte les préférences de l'utilisateur.

A cet effet, la présente invention propose un procédé de sélection d'une application parmi une pluralité d'applications installées sur un module de sécurité, aptes à dialoguer avec un équipement communicant comportant :
- une étape préalable de configuration comprenant une étape de détermination d'au moins un groupe d'applications auquel est associé un identifiant de groupe, une étape de détermination d'une application par groupe et une étape de mémorisation d'informations de configuration représentant l'association d'une application déterminée et de l'identifiant du groupe correspondant,
- une étape de réception d'un ordre de sélection contenant un identifiant de groupe émis par l'équipement communicant et
- une étape de sélection de l'application associée à l'identifiant de groupe reçu, en fonction des informations de configuration mémorisées.

Ainsi, le procédé selon l'invention permet à l'utilisateur de déterminer l'application qui devra être sélectionnée parmi un ensemble d'applications de même type. Ce procédé présente l'avantage de pouvoir fonctionner sans modification des bornes ou équipements communicants.

Dans un mode de réalisation particulier, lors de l'étape de sélection, l'ordre de sélection reçu est modifié puis transmis à l'application associée à l'identifiant de groupe.

Dans un mode de réalisation particulier, l'étape de détermination d'au moins un groupe d'applications comporte une étape d'installation sur le module de sécurité d'au moins une application de groupe, l'identifiant de groupe étant alors l'identifiant de l'application installée.

Ce mode de réalisation permet de limiter les modifications à apporter au système d'exploitation ("operating system" en anglais) du module sécurisé.

Ce mode particulier peut comporter en outre une ou plusieurs des caractéristiques suivantes :
- l'étape de sélection comporte une étape de sélection de l'application de groupe et une étape de réception de l'identifiant de l'application à sélectionner en provenance de l'application de groupe.
- l'étape de sélection comporte en outre une étape de réception d'une commande de redirection en provenance de l'application de groupe informant d'une redirection de l'application.

Dans un mode particulier, chaque groupe d'applications contient des applications de même domaine de service (paiement, transport...).

L'invention concerne également un module de sécurité comprenant des moyens de stockage aptes à coopérer avec des moyens de configuration pour stocker des informations de configuration représentant l'association d'une application déterminée et de l'identifiant du groupe correspondant, des moyens de réception d'un ordre de sélection comprenant un identifiant de groupe et des moyens de sélection d'une application associée à l'identifiant de groupe reçu.

L'invention concerne également un terminal apte à fonctionner avec un module de sécurité tel que décrit précédemment comprenant des moyens de configuration dans lesquels sont compris des moyens de détermination d'au moins un groupe d'applications auquel est associé un identifiant de groupe et des moyens de détermination d'une application par groupe.

L'invention concerne enfin un produit programme d'ordinateur comprenant des instructions pour mettre en oeuvre les étapes du procédé tel que décrit précédemment lorsqu'il est chargé et exécuté par un module de sécurité.

D'autre particularités et avantages de la présente invention apparaitront dans la description suivante d'un mode de réalisation donné à titre d'exemple non limitatif, en référence aux dessins annexés dans lesquels :
- la figure 1 est un schéma général présentant le contexte de l'invention
- la figure 2 est un schéma bloc représentant un module de sécurité selon l'invention
- la figure 3 est un schéma illustrant les différentes étapes du procédé de l'invention
- la figure 4 est un schéma illustrant les différentes étapes du procédé selon un premier mode de réalisation
- la figure 5 est un schéma illustrant les différentes étapes du procédé selon un second mode de réalisation.

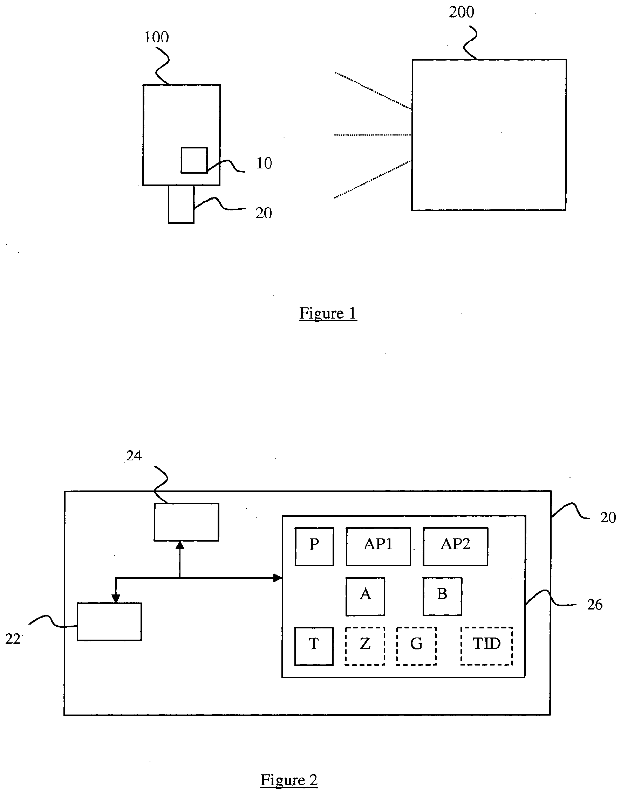

En référence à la figure 1, un utilisateur dispose d'un terminal mobile 100 sur lequel plusieurs applications ont été installées. Ce terminal mobile est par exemple un téléphone mobile ou un PDA (pour "Personal Digital Assistant").

Ce terminal mobile 100 comporte un module de communication sans contact 10 permettant un dialogue entre le terminal 100 et un équipement 200 appelé par la suite "borne sans contact". Le module sans contact est par exemple un module compatible NFC (pour "Near Field Communication").

Le terminal mobile 100 comporte également un module sécurisé 20 qui est une carte d'abonné de type UICC (pour "Universal Integrated Circuit Card").

A titre d'alternative, ce module peut être une zone mémoire sécurisée du terminal mobile ou un support amovible d'un autre type (par exemple une carte d'abonné de type SIM ou une carte à mémoire hébergeant un élément sécurisé (SD card, Embeded Secure contrôler ...)).

Une ou plusieurs applications (AP1, AP2...) ont été stockées dans la mémoire de la carte d'abonné. Parmi ces applications, une ou plusieurs sont des applications sans contact et fonctionnent en utilisant le module sans contact 10.

Une telle application est, par exemple, une application de paiement. Cette application sera alors utilisée à chaque fois que le porteur du mobile présentera son mobile devant une borne 200 de paiement. A chaque utilisation, un dialogue entre l'application stockée sur la carte d'abonné 20 et une borne sans contact 200 permet de réaliser une transaction de paiement. Ce dialogue entre le module sécurisé 20 et la borne sans contact 200 est effectué via le module sans contact 10.

La borne sans contact 200 émet un champ magnétique. Lorsque l'utilisateur du mobile se présente devant la borne, son terminal mobile entre dans le champ magnétique émis par la borne 200. Une transaction est alors effectuée entre l'application sélectionnée présente sur le module sécurisé du terminal mobile et la borne 200.

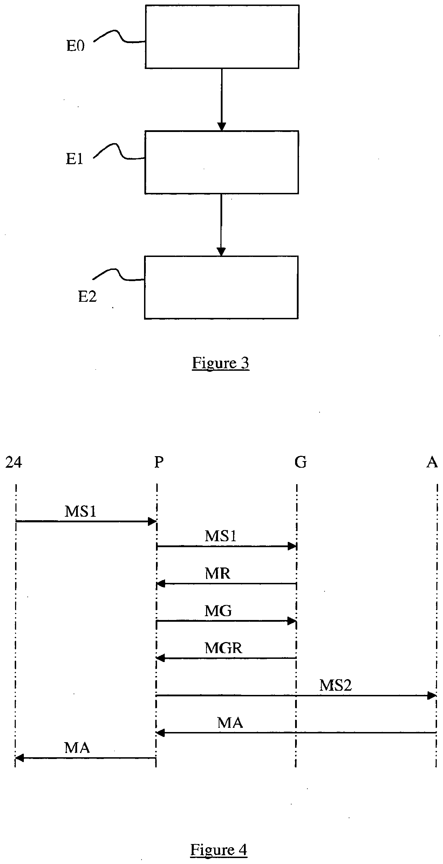

Plus précisément, lors de l'entrée du terminal mobile dans le champ magnétique de la borne sans contact, le module sans contact reçoit de la borne sans contact un message MS de sélection (select AID) contenant un identifiant et le transmet au module sécurisé. Lors de la réception de ce message MS, le module sécurisé met en oeuvre le procédé conforme à l'invention et décrit en référence à la figure 3. L'identifiant contenu dans le message MS correspond un identifiant de groupe d'applications présentes sur le module de sécurité et pour lequel un identifiant d'application a été associé. Le procédé selon l'invention va permettre de transférer cet ordre de sélection à l'application choisie par l'utilisateur pour ce groupe d'applications.

L'échange des messages entre le module sans contact et le module sécurisé s'effectue alors de façon classique, par exemple en utilisant le protocole SWP pour "Single Wire Protocol" ou l'interface S²C pour "SigIn-SigOut-Connection". En fonction de l'application sélectionnée, un certain nombre de messages vont ensuite être échangés entre l'application et la borne sans contact.

En référence à la figure 2, le module de sécurité comprend notamment un microprocesseur 22, un module d'émission-réception 24, une ou plusieurs mémoires 26 de type ROM ou EEPROM dans laquelle sont enregistrés des programmes pouvant être exécutés par le microprocesseur 22. Parmi ces programmes, figurent un programme principal P (appelé OS-carte pour "operating system") et une ou plusieurs applications (AP1, AP2, A, B...).

Le fonctionnement du module de sécurité 20 suite à la réception d'un ordre de sélection en provenance de la borne va maintenant être décrit plus précisément. Lors de la mise sous tension de la carte et/ou lorsqu'aucune application n'est sélectionnée, le microprocesseur de la carte exécute le programme principal P. Lorsque le module d'émission/réception 24 de la carte reçoit un ordre de sélection MS, cet ordre est transmis au microprocesseur et l'ordre est traité par le programme principal P. Conformément à la norme ISO 7816-4, cet ordre est de la forme CLA-INS-Paramètres. Le programme P détermine qu'il s'agit d'un ordre de sélection par lecture de l'octet INS. Les octets "Paramètres" contiennent alors, notamment, un identifiant qui correspond selon l'invention, à un identifiant de groupe, contrairement aux méthodes de l'état de l'art où cet identifiant est un identifiant d'une application particulière.

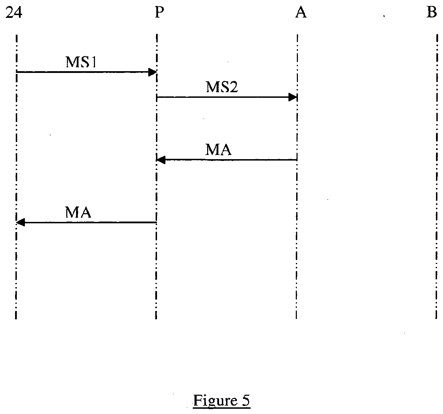

Les interactions entre le programme P, les applications et les zones de stockage de la carte seront détaillées en référence aux figures 4 et 5 qui décrivent deux modes de réalisation de l'invention.

En référence à la figure 3, un mode de réalisation de l'invention va maintenant être décrit.

Dans ce mode de réalisation, au moins deux applications de paiement A et B ont été stockées dans la mémoire du module de sécurité. L'application A est par exemple une application de paiement de la banque A. L'application B est une application de la banque B. A titre d'alternative, les applications A et B sont des applications de transport de deux villes différentes. Les applications A et B sont équivalentes en termes de service et sont ainsi considérées comme appartenant à un même groupe G.

L'utilisateur souhaite que ses transactions de paiement soient effectuées préférentiellement sur le compte qu'il possède à la banque A et non sur celui qu'il possède à la banque B. Aussi, dans une étape préalable E0 de configuration, l'utilisateur va configurer le module de sécurité pour lui indiquer ses préférences.

Dans une première sous étape E01, un groupe G d'applications contenant les applications A et B est constitué. Un identifiant de groupe IdG est associé à ce groupe G.

Préférentiellement, l'identifiant est un identifiant déjà utilisé par les bornes. Ainsi, il n'est pas nécessaire de modifier les bornes pour mettre en place l'invention.

Dans une deuxième sous-étape E02, à l'aide d'un menu sélectionné et affiché sur l'écran du terminal mobile et du clavier de celui-ci, l'utilisateur indique cette préférence en sélectionnant l'application A.

Suite à cette sélection, le terminal transmet, au module de sécurité, une information lui permettant d'identifier l'application déterminée A, par exemple l'identifiant IdA. Puis, lors d'une sous étape E03, le module de sécurité stocke une information de configuration représentant l'association de l'application déterminée et de l'identifiant de groupe correspondant.

Dans un mode de réalisation, l'information de configuration est l'identifiant IdA de l'application déterminée et est stockée dans une zone mémoire dédiée au groupe G correspondant. A titre d'alternative, l'information de configuration est l'adresse de l'application A dans le module de sécurité.

Dans un autre mode de réalisation, l'information de configuration est constituée de l'identifiant IdA de l'application sélectionnée et de l'identifiant du groupe G correspondant.

Cette information de configuration reste stockée en zone mémoire tant que l'utilisateur ne modifie pas son choix.

Dans une phase ultérieure, lors d'une étape E1, la borne envoie un message MS1 qui est un ordre de sélection SELECT en direction du terminal mobile. L'identifiant IdG contenu dans cet ordre de sélection est celui correspondant à l'identification de groupe G qui dans un mode de réalisation de l'invention, décrit en référence à la figure 4, est un identifiant d'une application de groupe, encore appelée application racine. L'étape E1 est suivie d'une étape E2 de sélection dans laquelle le module sécurisé sélectionne l'application A selon les informations de configuration mémorisées lors d'une étape préalable E0.

En référence à la figure 4, un mode de réalisation particulier de l'étape de sélection va maintenant être décrit.

Dans ce mode de réalisation, une application G dont l'identifiant est IdG a été 'téléchargée à l'aide d'un terminal mobile. Le téléchargement de cette application G se fait classiquement de la même façon que le téléchargement des applications existantes connu de l'homme du métier.

Lors de l'étape E0 de configuration, l'identifiant IdA de l'application A sélectionnée a été mémorisée dans une zone mémoire Z dédiée à l'application G.

Suite à la réception de l'ordre de sélection MS1, le programme P détermine l'adresse de l'application G correspondant à l'identifiant IdG reçu, par lecture dans une table de correspondance T où sont stockées les adresses des applications présentes sur la carte. Le programme P lance l'exécution de cette application G par envoi du message MS1 à cette application G.

L'application G lit alors dans la mémoire Z la valeur de l'identifiant IdA correspondant à l'application A choisie par l'utilisateur lors de la phase de configuration E0.

Elle envoie ensuite un message MR qui est un message REDIRECT au programme P. Ce message indique au programme P que l'application sélectionnée G est une application de groupe. Ce message est par exemple un message ayant la même structure qu'un message d'acquittement. Selon la norme ISO 7816-4, un message d'acquittement comprend deux octets, appelés "octets de status". La liste des valeurs possibles pour ce couple d'octets est définie également dans la norme. Le message de redirection pourrait, par exemple, être constitué d'un couple d'octets ne figurant pas dans la liste des valeurs possibles pour le message d'acquittement, par exemple "AF-XX".

Le programme P analyse ce message MR et détermine qu'il s'agit d'un message de redirection et non d'un message d'acquittement. Le message MR n'est donc pas retransmis à la borne.

Le programme P envoie alors un message MG à l'application de groupe G pour demander l'identifiant IdA de l'application A à sélectionner. Ce message MG est par exemple, un message GET-RESPONSE conforme à la norme ISO 7816-4 contenant en paramètres l'octet XX reçu dans le message MR.

Suite à la réception de cet ordre MG, l'application G renvoie au programme P un message MGR contenant les XX octets représentant l'identifiant IdA de l'application A lu dans la mémoire Z.

A titre d'alternative, l'identifiant IdA est lu dans la mémoire Z, non pas dès réception de la commande de sélection MS1 par l'application G mais après l'envoi de l'ordre REDIRECT ou encore lors de la réception de l'ordre GET-RESPONSE.

A l'aide de cet identifiant IdA reçu dans le message MGR et de la table de correspondance T, le programme P détermine l'adresse de l'application A correspondant à cet identifiant IdA.

Il compose et transmet ensuite un message MS2 qui est un ordre SELECT de sélection de cette application A à l'application A. Ce message MS2 correspond au message MS1 reçu dans lequel l'identifiant IdG est remplacé par l'identifiant IdA

L'application sélectionnée A répond au programme P par un message d'acquittement MA1 conforme à la norme ISO 7816-4. Ce message MA1 est transmis à la borne par le programme P.

Le programme P attend ensuite un nouvel ordre de la borne qu'il transmettra ensuite directement à l'application A jusqu'à réception d'un nouvel ordre de sélection SELECT.

Dans un autre mode de réalisation, le message MGR de réponse au message MG (GET-RESPONSE) contient l'identifiant IdA de l'application A ainsi que l'adresse de l'application A lue dans la table de correspondance T. Lors de la réception du message MGR, le programme P transmet le message MS2 à l'adresse contenue dans le message MGR.

Lors de la phase de configuration, plusieurs groupes d'application peuvent être constitués. Une mémoire Z par groupe d'applications G est utilisée. Une application de groupe est téléchargée sur le module de sécurité pour chaque groupe.

Dans le cas particulier où un groupe ne contient qu'une seule application, il n'est pas nécessaire de télécharger une application de groupe pour ce groupe. Dans ce cas, la sélection de cette application est réalisée conformément à ce qui existe dans l'état de l'art

En référence à la figure 5, un second mode de réalisation de l'invention va être décrit.

Dans ce mode de réalisation, une table TID contient l'ensemble des identifiants IdG de groupe et, en correspondance de chaque identifiant de groupe, l'identifiant d'une application à sélectionner. Cette table TID est mémorisée dans une mémoire 26 du module sécurisé. Lors de l'étape E0 de configuration par l'utilisateur, l'identifiant de l'application choisie par l'utilisateur sera mémorisé dans la table TID en correspondance avec l'identifiant de groupe concerné.

Lors de la réception d'un ordre de sélection MS1, le programme principal P du module sécurisé recherche dans la table TID si l'identifiant reçu est présent dans la table en tant qu'identifiant de groupe. Si l'identifiant de groupe reçu est présent dans la table, le programme P récupère dans cette table TID l'identifiant IdA en correspondance de cet identifiant de groupe.

Le programme P peut ensuite récupérer l'adresse de l'application correspondant à l'identifiant IdA dans la table T et envoyer un ordre de sélection MS2 contenant l'identifiant IdA à l'adresse récupérée.

A titre d'alternative, la table TID contient l'ensemble des identifiants des applications installées sur le module de sécurité ainsi que l'ensemble des identifiants de groupe. En correspondance de chaque identifiant de groupe est mémorisé un identifiant d'une application de ce groupe et en correspondance d'un identifiant d'une application qui n'est pas une application de groupe est mémorisé l'identifiant de cette application.

Lors de la réception d'un ordre de sélection, le programme P lira dans la table TID l'identifiant de l'application à sélectionner, déterminera l'adresse de l'application liée à cette application et enverra un ordre de sélection contenant l'identifiant lu dans la table TID à l'adresse correspondante. Ainsi, le traitement effectué est le même quel que soit le type d'identifiant (identifiant de groupe ou non) reçu.

Le module de sécurité 20 peut contenir plusieurs applications se répartissant en plusieurs groupes; par exemple un groupe G1 de trois applications de paiement et un groupe G2 constitué de deux applications de transport. Lors de l'étape préalable E0, l'utilisateur sélectionne une application pour chaque groupe déterminé. L'étape de mémorisation consiste à stocker l'identifiant de l'application sélectionnée en correspondance avec l'identifiant du groupe déterminé. Le module de sécurité stocke ainsi autant de couples (identifiant d'application de groupe, identifiant d'application à déterminer) que de groupes.

Lors de l'initialisation de la carte ou lors de l'installation d'une application de groupe, un identifiant d'application par défaut sera associé à un identifiant de groupe

Dans un mode de réalisation, la liste des applications appartenant à un groupe est déterminée par l'utilisateur et sera affichée lors d'une demande de configuration pour un groupe et l'utilisateur devra choisir parmi cette liste.

Dans un autre mode de réalisation, les groupes ne sont pas préformés et l'utilisateur sélectionnera l'application privilégiée pour un groupe parmi l'ensemble des applications présentes sur le module de sécurité.

L'invention a été décrite avec un terminal mobile contenant des applications sans contact, le dialogue entre le terminal et la borne s'effectuant via un module sans contact.

L'invention s'applique également lorsque le dialogue entre le terminal et la borne utilise un autre moyen de communication, par exemple une liaison filaire.

L'invention s'applique également aux cartes à puces insérées directement dans un lecteur; par exemple, un terminal de paiement (TPE) ou un distributeur d'argent.

## Revendications

1. Procédé de sélection d'une application parmi une pluralité d'applications installées sur un module de sécurité, aptes à dialoguer avec un équipement communicant **caractérisé en ce qu'**il comporte :
- une étape préalable (E0) de configuration comprenant une étape (E01) de détermination d'au moins un groupe d'applications auquel est associé un identifiant de groupe, une étape (E02) de détermination d'une application par groupe et une étape (E03) de mémorisation d'informations de configuration représentant l'association d'une application déterminée et de l'identifiant du groupe correspondant
- une étape de réception (E1) d'un ordre de sélection contenant un identifiant de groupe émis par l'équipement communicant, et
- une étape de sélection (E2) de l'application associée à l'identifiant de groupe reçu, en fonction des informations de configuration mémorisées.

2. Procédé selon la revendication 1 dans lequel lors de l'étape de sélection de l'application, l'ordre de sélection reçu est modifié et transmis à l'application associée à l'identifiant de groupe.

3. Procédé selon l'une des revendications 1 ou 2 dans lequel l'étape (E01) de détermination d'au moins un groupe d'applications comporte une étape d'installation sur le module de sécurité d'au moins une application de groupe, l'identifiant de groupe étant alors l'identifiant de l'application installée.

4. Procédé selon la revendication 3 dans lequel l'étape de sélection comporte une étape de sélection de l'application de groupe et une étape de réception de l'identifiant de l'application à sélectionner en provenance de l'application de groupe.

5. Procédé selon la revendication 4 dans lequel l'étape de sélection comporte en outre une étape de réception d'une commande de redirection (MR) en provenance de l'application de groupe informant d'une redirection de l'application.

6. Procédé selon l'une des revendications précédentes dans lequel le groupe d'applications est constitué d'applications du même domaine de service.

7. Module de sécurité (20) comprenant des moyens de stockage d'une pluralité d'applications aptes à dialoguer avec un équipement communicant (200) caractérisé en qu'il comporte en outre :
- des moyens de stockage aptes à coopérer avec des moyens de configuration pour stocker des informations de configuration représentant l'association d'une application déterminée et de l'identifiant du groupe correspondant,
- des moyens de réception d'un ordre de sélection comprenant un identifiant de groupe, et
- des moyens de sélection d'une application associée à l'identifiant de groupe reçu.

8. Terminal (100) apte à fonctionner avec un module de sécurité (20) selon la revendication 7 comprenant des moyens de configuration dans lesquels sont compris des moyens de détermination d'au moins un groupe d'applications auquel est associé un identifiant de groupe et des moyens de détermination d'une application par groupe.

9. Produit programme d'ordinateur comprenant des instructions pour mettre en oeuvre les étapes du procédé selon l'une des revendications 1 à 6 lorsqu'il est chargé et exécuté par le module de sécurité (20).

## Patentansprüche

1. Verfahren zur Auswahl einer Anwendung aus einer Vielzahl von auf einem Sicherheitsmodul installierten Anwendungen, die mit einer kommunizierenden Ausrüstung dialogisieren können, **dadurch gekennzeichnet, dass** es aufweist:
- einen vorhergehenden Konfigurationsschritt (E0), der einen Schritt (E01) der Bestimmung mindestens einer Gruppe von Anwendungen, der eine Gruppenkennung zugeordnet ist, einen Schritt (E02) der Bestimmung einer Anwendung pro Gruppe und einen Speicherschritt (E03) von Konfigurationsinformationen, die die Zuordnung einer bestimmten Anwendung und der Kennung der entsprechenden Gruppe darstellen,
- einen Empfangsschritt (E1) eines Auswahlbefehls, der eine von der kommunizierenden Ausrüstung gesendete Gruppenkennung enthält, und
- einen Auswahlschritt (E2) der der empfangenen Gruppenkennung zugeordneten Anwendung abhängig von den gespeicherten Konfigurationsinformationen.

2. Verfahren nach Anspruch 1, wobei im Auswahlschritt der Anwendung der empfangene Auswahlbefehl geändert und an die der Gruppenkennung zugeordnete Anwendung übertragen wird.

3. Verfahren nach einem der Ansprüche 1 oder 2, wobei der Schritt (E01) der Bestimmung mindestens einer Gruppe von Anwendungen einen Schritt des Installierens auf dem Sicherheitsmodul mindestens einer Gruppenanwendung aufweist, wobei die Gruppenkennung dann die Kennung der installierten Anwendung ist.

4. Verfahren nach Anspruch 3, wobei der Auswahlschritt einen Schritt der Auswahl der Gruppenanwendung und einen Schritt des Empfangs der Kennung der auszuwählenden Anwendung enthält, die von der Gruppenanwendung kommt.

5. Verfahren nach Anspruch 4, wobei der Auswahlschritt außerdem einen Schritt des Empfangs eines von der Gruppenanwendung kommenden Weiterleitungsbefehls (MR) enthält, der über eine Weiterleitung der Anwendung informiert.

6. Verfahren nach einem der vorhergehenden Ansprüche, wobei die Gruppe von Anwendungen aus Anwendungen des gleichen Dienstbereichs besteht.

7. Sicherheitsmodul (20), das Speichereinrichtungen einer Vielzahl von Anwendungen enthält, die mit einer kommunizierenden Ausrüstung (200) dialogisieren können, **dadurch gekennzeichnet, dass** es außerdem aufweist:
- Speichereinrichtungen, die mit Konfigurationseinrichtungen zusammenwirken können, um Konfigurationsinformationen zu speichern, die die Zuordnung einer bestimmten Anwendung und der Kennung der entsprechenden Gruppe darstellen,
- Empfangseinrichtungen eines Auswahlbefehls, der eine Gruppenkennung enthält, und
- Auswahleinrichtungen einer Anwendung, die der empfangenen Gruppenkennung zugeordnet ist.

8. Endgerät (100), das mit einem Sicherheitsmodul (20) nach Anspruch 7 arbeiten kann, das Konfigurationseinrichtungen, in denen Einrichtungen zur Bestimmung mindestens einer Gruppe von Anwendungen enthalten sind, der eine Gruppenkennung zugeordnet ist, und Einrichtungen zur Bestimmung einer Anwendung pro Gruppe enthält.

9. Computerprogrammprodukt, das Anweisungen enthält, um die Schritte des Verfahrens nach einem der Ansprüche 1 bis 6 durchzuführen, wenn es vom Sicherheitsmodul (20) geladen und ausgeführt wird.

## Claims

1. Method for selecting an application from a plurality of applications installed on a security module, capable of dialoguing with a communicating equipment item, **characterized in that** it comprises:
- a preliminary configuration step (E0) comprising a step (E01) of determination of at least one group of applications with which a group identifier is associated, a step (E02) of determination of an application per group and a step (E03) of storage of configuration information representing the association of a determined application and of the corresponding group identifier
- a step of reception (E1) of a selection command containing a group identifier sent by the communicating equipment item, and
- a step of selection (E2) of the application associated with the group identifier received, as a function of the configuration information stored.

2. Method according to Claim 1, in which, in the step of selection of the application, the selection command received is modified and transmitted to the application associated with the group identifier.

3. Method according to one of Claims 1 or 2, in which the step (E01) of determination of at least one group of applications comprises a step of installation, on the security module, of at least one group application, the group identifier then being the identifier of the application installed.

4. Method according to Claim 3, in which the selection step comprises a step of selection of the group application and a step of reception of the identifier of the application to be selected from the group application.

5. Method according to Claim 4, in which the selection step further comprises a step of reception of a redirection command (MR) from the group application informing of a redirection of the application.

6. Method according to one of the preceding claims, in which the group of applications is made up of applications from the same service domain.

7. Security module (20) comprising means for storing a plurality of applications capable of dialoguing with a communicating equipment item (200), **characterized in that** it further comprises:
- storage means capable of cooperating with configuration means for storing configuration information representing the association of a determined application and of the corresponding group identifier,
- means for receiving a selection command comprising a group identifier, and
- means for selecting an application associated with the group identifier received.

8. Terminal (100) capable of operating with a security module (20) according to Claim 7 comprising configuration means in which are included means for determining at least one group of applications with which a group identifier is associated and means for determining an application per group.

9. Computer program product comprising instructions for implementing the steps of the method according to one of Claims 1 to 6 when it is loaded and executed by the security module (20).
